## Europäisches Patentamt
## European Patent Office
## Office européen des brevets

(11) Veröffentlichungsnummer: **0 177 672**
**B1**

(12) **EUROPÄISCHE PATENTSCHRIFT**

(45) Veröffentlichungstag der Patentschrift:
**07.12.88**

(21) Anmeldenummer: **85107182.9**

(22) Anmeldetag: **11.06.85**

(51) Int. Cl.⁴: **F 16 D 65/12, F 16 D 55/224**

(54) Bremsscheibenanordnung für eine innen umgreifende Scheibenbremse, insbesondere für Kraftfahrzeuge.

(30) Priorität: **09.10.84 DE 3436973**

(43) Veröffentlichungstag der Anmeldung:
**16.04.86 Patentblatt 86/16**

(45) Bekanntmachung des Hinweises auf die Patenterteilung:
**07.12.88 Patentblatt 88/49**

(84) Benannte Vertragsstaaten:
**DE FR GB IT**

(56) Entgegenhaltungen:
**DE-A- 2 728 335**
**DE-B- 2 101 428**
**FR-A- 2 248 743**
**GB-A- 1 312 584**
**GB-A- 1 339 664**
**GB-A- 2 052 653**
**US-A- 4 282 952**

(73) Patentinhaber: **ALFRED TEVES GmbH,
Guerickestrasse 7 Postfach 90 01 20, D-6000 Frankfurt
am Main (DE)**

(72) Erfinder: **Thiel, Rudolf, Am Ebelfeld 179,
D-6000 Frankfurt/Main 90 (DE)**
Erfinder: **Klimt, Ulrich, Rossbergring 36,
D-6107 Reinheim 5 (DE)**

(74) Vertreter: **Grau, Ulf, c/o ALFRED TEVES GMBH
Guerickestrasse 7, D-6000 Frankfurt (M) 90 (DE)**

## Beschreibung

Die Erfindung betrifft eine Bremsscheibenanordnung für eine innen umgreifende Scheibenbremse, insbesondere für Kraftfahrzeuge, gemäss dem Oberbegriff des Patentanspruches 1.

Eine derartige Bremsscheibenanordnung ist aus der GB-A-10 27 686 bekannt. Bei der bekannten Bremsscheibenanordnung besteht der Blechträger aus fünf Segmenten, die mit ihrem radial äusseren Randbereich unmittelbar in den Gussbremsring eingegossen sind. Der Gussbremsring weist dazu eine radiale Erstreckung auf, die in radialer Richtung über die Bremsflächen hinausgeht. Diese bekannte Anordnung hat verschiedene Nachteile. Diese Nachteile bestehen insbesondere darin, dass aufgrund der radialen Erstreckung des Gussbremsringes, in die der äussere Rand der Blechträgersegmente eingegossen ist, viel Platz verlorengeht. Dadurch wird ein wesentlicher Vorteil innen umgreifender Scheibenbremsen, nämlich einen möglichst grossen Reibradius zu schaffen, zumindest teilweise wieder aufgehoben. Ein weiterer Nachteil besteht darin, dass der Blechträger aus einzelnen Trägersegmenten besteht, die lediglich über den Gussbremsring verbunden sind, in ihrem inneren Bereich jedoch keine Verbindung untereinander aufweisen. Dadurch wird selbstverständlich die Stabilität der ganzen Anordnung wesentlich beeinträchtigt, wodurch die Bremsscheibe für Hochleistungsbremsen ungeeignet ist. Weitere Nachteile ergeben sich aus dem unmittelbaren Eingiessen des Blechträgers in den Gussbremsring, was fertigungstechnisch relativ aufwendig ist, da nach dem Giessvorgang noch Bearbeitungsvorgänge wie Planschleifen am Gussbremsring erfolgen müssen.

Eine weitere Möglichkeit der umfangseitigen Befestigung einer Bremsscheibe ist aus der GB-A-1 312 584 bekannt. Die Bremsscheibe weist hier an ihrem Umfang Vorsprünge auf, die in Unterbrechungen am Umfang eines trommelförmigen Trägers hineinragen und die den äusseren Durchmesser des Trägers geringfügig überragen. Die Verbindung der Bremsscheibe mit dem Träger erfolgt über Federstreifen, die mittels Sechskantschrauben am Trägerumfang befestigt sind und auf die Vorsprünge der Bremsscheibe drücken. Infolge der Bauhöhe des zylindrischen Teils der Befestigungstrommel, der Federstreifen und der Schraubenköpfe wird auch hier der Vorteil der innen angreifenden Scheibenbremse teilweise wieder zunichte gemacht, weil durch diese Form der Befestigung der Scheibendurchmesser und damit die Reibfläche der Scheibe verkleinert wird.

Der Erfindung liegt die Aufgabe zugrunde, eine Bremsscheibenanordnung der im Oberbegriff des Patentanspruches 1 angegebenen Art dahingehend zu verbessern, dass ein möglichst grosser Reibradius erzielt werden kann. d.h. mit anderen Worten, dass der im Rad zur Verfügung stehende Raum insbesondere in radialer Richtung so weit wie möglich ausgenutzt wird.

Diese Aufgabe wird erfindungsgemäss durch die den Patentanspruch 1 kennzeichnenden Merkmale gelöst.

Mit der erfindungsgemässen Lösung wird eine Bremsscheibenanordnung geschaffen, die einen grösstmöglichen Reibradius des Bremsringes ermöglicht. Ferner ist die Anordnung fertigungstechnisch insofern günstig, als sie es ermöglicht, zwei Fertigteile, nämlich den Gussbremsring einerseits und den Blechträger andererseits so sicher und verzugsfrei miteinander zu verbinden, dass eine Nacharbeit nach der Schweissoperation nicht erforderlich ist.

Der Verlustabstand zwischen Radfelge und dem wirksamen Bremsflächen-Aussendurchmesser ist geringst möglich und wird nicht durch die Anordnung von platzaufwendigen Befestigungseinrichtungen beeinträchtigt. Darüberhinaus ist der erfindungsgemässe Blechträger wesentlich stabiler als der bekannte, aus einzelnen Segmenten bestehende Blechträger.

Eine vorteilhafte Ausführungsform der Erfindung. sieht vor, dass das Verbindungselement ringförmig ausgebildet ist, wobei die äussere Umfangsfläche zumindest eine Anlagefläche für den Blechträger bildet, die insbesondere durch einen radialen, nach aussen weisenden Vorsprung gebildet wird. Durch diese Anordnung wird einerseits eine Gewichtsoptimierung erzielt und andererseits wird durch das einstückige ringförmig ausgebildete Zwischenelement eine einfache Herstellung ermöglicht. Bei einer anderen Ausführungsform, bei der als Verbindung mehrere Segmente vorgesehen sind, kann sich eine weitere Gewichtsreduzierung ergeben.

In sehr vorteilhafter Weise kann die Erfindung bei einer Bremsscheibe eingesetzt werden, deren Bremsring zur Kühlung aus zwei axial voneinander beabstandeten, über Rippen oder dergleichen miteinander verbundenen Teilbremsringen besteht. Wenn, gemäss einer weiteren Ausgestaltung der Erfindung das Zwischenelement nur in einem, insbesondere dem Blechträger zugewandten Teilbremsring angeordnet ist, ergibt sich der weitere Vorteil, dass die Kühlkanäle des Bremsringes nicht vom Blechträger überdeckt sind und somit nicht in ihrer Kühlwirkung beeinträchtigt werden.

Die zwischen den insbesondere mittels Elektronenstrahlschweissung miteinander verschweissten Teilen, nämlich dem Verbindungselement und dem Blechträger vorgesehene Schweissnaht erstreckt sich zweckmässig parallel zur Achse der Bremsscheibe, d.h. mit anderen Worten, sie erstreckt sich im wesentlichen in einer Ebene parallel zu der vom Verbindungselement gebildeten Anlagefläche.

Um den in der Radfelge zur Verfügung stehenden Raum möglichst weitgehend für die Bremsfläche auszunutzen, entspricht, gemäss einer weiteren Ausführungsform die Differenz des Aussendurchmessers des Verbindungselementes und des Reibringes im wesentlichen der Blechdicke des Verbindungselementes und liegt daher im Bereich von etwa 1,5 bis 5 mm, insbesondere bei 2 bis 3 mm.

Zur Versteifung des Blechträgers kann dieser gemäss einer bevorzugten Ausführungsform Verstärkungsrippen oder Sicken aufweisen, die sich im wesentlichen in radialer und/oder Umfangsrichtung erstrecken und dabei vorteilhaft durchgehend in zumindest zwei Armen verlaufen.

Die Verstärkungsrippen sind dabei bevorzugt mittels Pressen, Prägen oder Tiefziehen im Blechträger geformt.

Um auf der dem Blechträger abgewandten Seite eine weitere Vergrösserung des Reibradius zu erzielen, weist der auf dieser Seite vorgesehene Teilbremsring einen grösseren Durchmesser auf als der andere Teilbremsring, an dem der Blechträger befestigt ist.

Weitere vorteilhafte Ausgestaltungen sehen vor, dass der Verbindungsabschnitt des Blech-Bremsscheibenträgers von den Endabschnitten mehrerer sternförmig angeordneter Arme gebildet ist oder dass der Verbindungsabschnitt umlaufend napfförmig ausgebildet ist und zumindest eine, dem Bremsweg benachbarte Öffnung zur Entnahme des Bremsbelags aufweist.

Um den festen Sitz des Verbindungselementes im Gussring weiter zu verbessern, ist vorgesehen, dass das Verbindungselement sich im wesentlichen in axialer Richtung erstreckende Öffnungen, insbesondere durchgehende Bohrungen aufweist.

Ausführungsbeispiele der Erfindung und ihrer Ausgestaltungen sind in der Zeichnung dargestellt und im folgenden beschrieben.

Es zeigen

Fig. 1 einen Teil-Längsschnitt durch eine Radfelge mit darin angeordneter innen umgreifende Scheibenbremse;

Fig. 2 eine axiale Ansicht der bei der Scheibenbremse gemäss Fig. 1 verwendeten Bremsscheibenordnung;

Fig. 3 einen Schnitt entlang der Linie E–E der Bremsscheibenanordnung gemäss Fig. 2;

Fig. 4 eine axiale Ansicht eines ringförmigen Verbindungselementes,

Fig. 5 eine axiale Ansicht eines Verbindungssegmentes;

Fig. 6 eine axiale Ansicht eines Ausschnittes einer anderen Ausführungsform eines Verbindungselementes, und

Fig. 7 eine axiale Ansicht einer Anordnung mit einem napfförmigen Blech-Bremsscheibenträger.

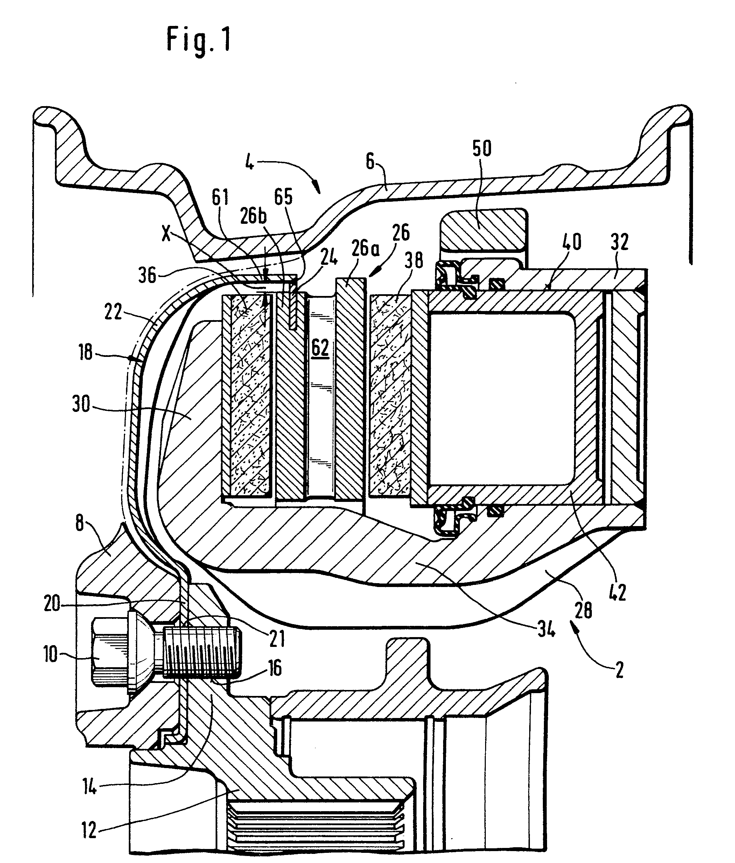

Es wird zunächst auf Fig. 1 Bezug genommen, die eine Anordnung einer innen umgreifenden Scheibenbremse 2 in einem Fahrzeugrad 4 zeigt. Vom Fahrzeugrad ist hier nur die Radfelge 6 und teilweise die Radschüssel 8 dargestellt. Das Fahrzeugrad 4 ist über die Radschüssel 8 mittels Schraubbolzens 10 an einem Radlagergehäuse 12 befestigt. Mittels des Radlagergehäuses 12 ist das Fahrzeugrad 4 über ein (hier nicht dargestelltes) Lager auf einer mit dem Achsschenkel verbundenen (gleichfalls nicht dargestellten) Achsspindel drehbar gelagert. Das Radlagergehäuse 12 weist dazu einen Flansch 14 auf, in dem Gewindebohrungen 16 vorgesehen sind, in die die Schraubbolzen 10 eingeschraubt werden. Mit den Schraubbolzen 10 wird auch ein Bremsscheibenträger 18 am Flansch 14 befestigt, wobei der Bremsscheibenträger 18 zwischen dem Flansch 14 und der Radschüssel 8 angeordnet ist. Wie weiter unten näher beschrieben ist, weist der Bremsscheibenträger 18 einen radial innen liegenden im wesentlichen kreisringförmigen Befestigungsabschnitt 20 auf, in dem Bohrungen 21 zur Durchführung der Schraubbolzen 10 vorgesehen sind und einen der Kontur der Radschüssel 8 angepassten Trägerabschnitt 22. Der Trägerabschnitt 22 bildet einen End- oder Verbindungsabschnitt, welcher im wesentlichen achsparallel verläuft und an dem ein Verbindungselement 24 befestigt ist. Mit dem Verbindungselement 24 ist ein Reibring 26 verbunden, der die eigentliche Bremsscheibe bildet und zu diesem Zweck zwei gegenüberliegende Reibflächen aufweist.

Die innen umgreifende Scheibenbremse 2 weist ein Bremsgehäuse 28 auf, welches im Längsschnitt im wesentlichen U-förmig ausgebildet ist, wobei es zwei sich radial nach aussen erstreckende Schenkel 30, 32 aufweist, die über ein Brückenteil 34 miteinander verbunden sind. Zu beiden Seiten des Reibringes 26 sind Bremsbeläge 36, 38 angeordnet, die vom U-förmigen Bremsgehäuse 28 umgriffen werden. Zur Betätigung der Scheibenbremse weist der innenliegende Schenkel 32 eine Zylinderbohrung 40 auf, in der ein Kolben 42 axial verschiebbar angeordnet ist. Der Kolben 42 beaufschlagt unmittelbar den innenliegenden Bremsbelag 38, wodurch als Reaktion das Bremsgehäuse 28 entgegengesetzt nach innen verschoben wird und dadurch auch der aussenliegende Belag 36 beaufschlagt wird. Das Bremsgehäuse 28 ist zu diesem Zweck verschiebbar an einem stationären Bremsträger 50 gelagert.

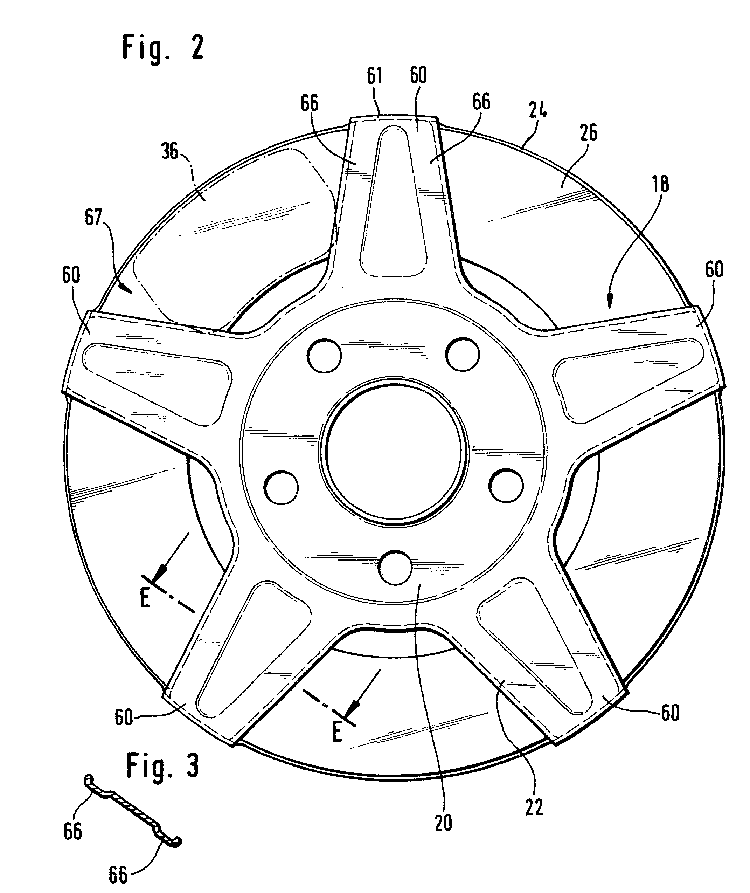

Die in Fig. 2 in einer axialen Ansicht zu sehende Bremsscheibenanordnung weist einen Bremsscheibenträger 18 auf, der aus Blech gefertigt ist. Der einstückig ausgebildete Bremsscheibenträger 18 bildet einen zentralen, im wesentlichen kreisringförmigen Befestigungsabschnitt 20, von dessen Aussenumfang sich sternförmig angeordnete Arme 60 erstrecken, die jeweils einen gekrümmten, der Kontur der Radschüssel 8 angepassten Trägerabschnitt 22 bilden, der in einen sich im wesentlichen achsparallel erstreckenden Trägerabschnitt 61 (vgl. auch Fig. 1) übergeht. Die Trägerabschnitte 61 enden über dem Verbindungselement 24, welches in den Reibring 26 der Bremsscheibe eingegossen ist. Der hier dargestellte Reibring 26 besteht aus zwei axial beabstandeten Teilreibringen 26a, 26b, die über Rippen 62 miteinander verbunden sind, wobei dazwischen Belüftungskanäle verbleiben. Wie in Fig. 1 zu sehen ist, ist der innenliegende Teilreibring 26a im Durchmesser grösser ausgeführt, wodurch auf dieser Seite eine grössere Reibfläche zur Verfügung steht.

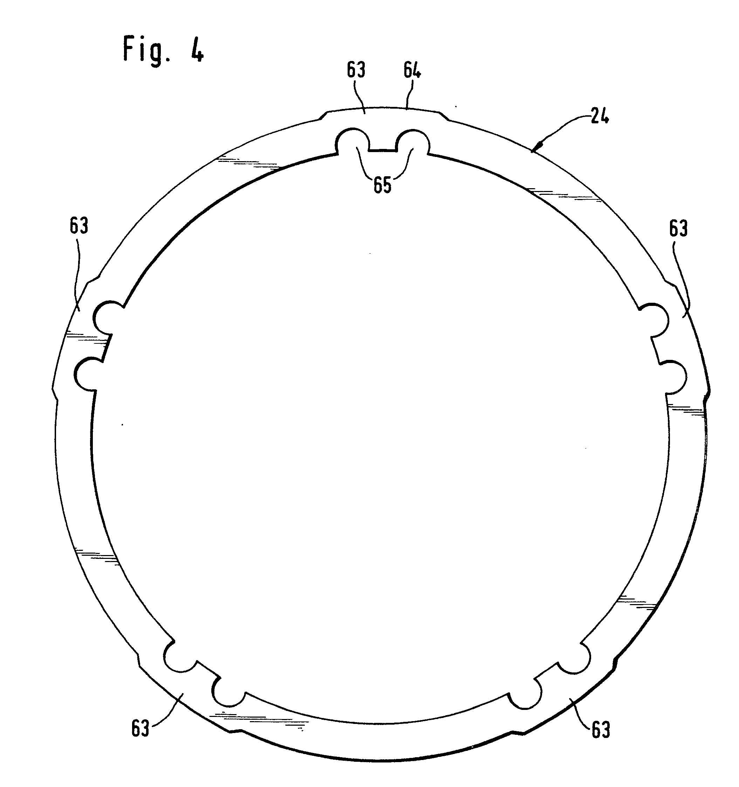

Das Verbindungselement 24, welches hier Kreisringform aufweist, ist so in den dem Bremsscheibenträger 18 zugewandten Teilreibring 26b eingegossen, dass es geringfügig, d.h. im Bereich von 1,5 bis 5 mm, insbesondere 2 bis 3 mm, über dessen äusseren Umfang vorspringt. Die Differenz des Aussendurchmessers des Verbindungselementes 24 und des Aussendurchmessers des Teilreibringes 26b entspricht dabei etwa der Blechdicke des Verbindungselementes 24. An seinem Aussenumfang weist das Verbindungselement 24 eine der Anzahl der Arme 60 entsprechende Anzahl von sich radial nach aussen erstreckenden Vorsprüngen 63 (Fig. 4) auf, die Anlageflächen 64 für die Innenflächen oder Trägerend- bzw. Verbindungsabschnitte 61 bilden. Das Verbindungselement 24 weist durchgehende Öffnungen 65 auf, die zum Innenrand hin offen sind und die beim Eingiessen vom Gussmaterial durchdrungen werden. Zwischen diesen Innenflächen und den Anlageflächen 64 verläuft die Schweissnaht 65, die insbesondere mittels Elektronenstrahlschweissung oder einem anderen verzugsarmen Schweissverfahren hergestellt ist, welches ähnliche Betriebsparameter aufweist. Die sternförmig angeordneten Arme 60 des Bremsscheibenträgers 18 sind so bemessen, dass sich eine hinreichende Festigkeit bzw. Steifigkeit ergibt. Ausserdem ist die Anordnung so gewählt, dass zwischen zumindest zwei Armen ein freier Raum 66 verbleibt, durch den der aussenliegende Bremsbelag 36 radial entnommen werden kann. Um eine genügende Steifigkeit zu erzielen, sind die Arme 60 mit Verstärkungsrippen oder Sicken 66 versehen. Diese Verstärkungsrippen erstrecken sich am Rand der Arme 60 und können durchgehend von einem Arm über den Befestigungsabschnitt 20 in zumindest einen weiteren Arm 60 verlaufen. In herstellungstechnisch zweckmässiger Weise wird der Bremsscheibenträger 18 in einem Press-, Präge- oder Tiefziehvorgang hergestellt, wobei gleichzeitig die Verstärkungsrippen 66 mit ausgeformt werden.

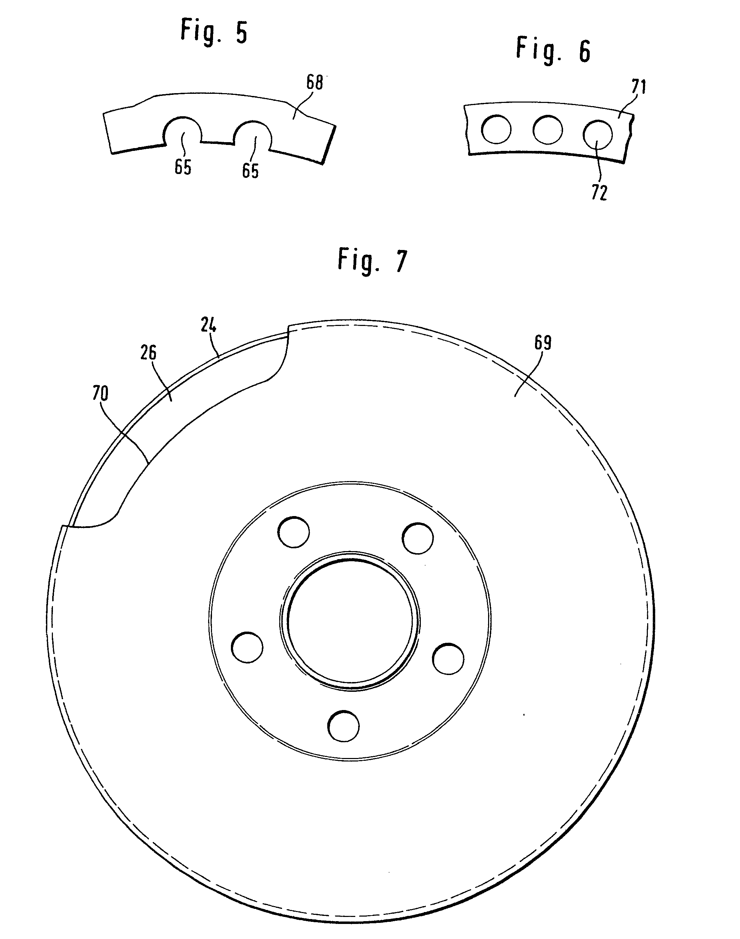

In Fig. 5 ist ein Verbindungssegment 68 dargestellt, welches in entsprechender Anzahl anstelle eines durchgehenden ringförmigen Verbindungselements verwendet werden kann. Fig. 6 zeigt einen Ausschnitt aus einem ringförmigen Verbindungselement 71 mit durchgehenden geschlossenen Bohrungen 72, die beim Vergiessen von Werkstoff durchdrungen werden. Fig. 7 zeigt eine Anordnung mit einem napf- oder schüsselförmigen Blech-Bremsscheibenträger 69, der weitestgehend geschlossen ausgebildet ist. Für die radiale Entnahme des Bremsbelages ist im Bereich des Bremsringes eine entsprechend dimensionierte Öffnung bzw. ein Ausschnitt 70 vorgesehen.

Bezugszeichenliste
2 innen umgreifende Scheibenbremse
4 Fahrzeugrad
6 Radfelge
8 Radschüssel
10 Schraubbolzen
12 Radlagergehäuse
14 Flansch
16 Gewindebohrung
18 Bremsscheibenträger
20 Befestigungsabschnitt
21 Bohrung
22 Trägerabschnitt
24 Verbindungselement
26 Reibring (Bremsscheibe)
26a Teilreibring
26b Teilreibring
28 Bremsgehäuse
30 Schenkel
32 Schenkel
34 Brückenteil
36 Bremsbelag
38 Bremsbelag
40 Zylinderbohrung
42 Kolben
50 Bremsträger
60 Arm
61 Trägerabschnitt
62 Rippen
63 Vorsprung
64 Anlagefläche
65 Schweissnaht
66 Verstärkungsrippe
67 Öffnung
68 Verbindungssegment
69 Blech-Bremsscheibenträger
70 Öffnung, Ausschnitt
72 Verbindungselement

**Patentansprüche**

1. Bremsscheibenanordnung für eine innen umgreifende Scheibenbremse (2), insbesondere für Kraftfahrzeuge, mit einem Gussbremsring (26), der zwei auf gegenüberliegenden Seiten angeordnete Bremsflächen aufweist, und einem Blech-Bremsscheibenträger (18), der zumindest einen Verbindungsabschnitt (60) aufweist, über den er im Bereich des Aussenumfanges des Bremsringes (26) mit diesem verbunden ist, dadurch gekennzeichnet, dass am Gussbremsring (26) zumindest ein sich im wesentlichen radial erstreckendes Verbindungselement (24) angebracht ist, dessen Aussendurchmesser nur geringfügig grösser ist als der Aussendurchmesser des Gussbremsringes (26), dass der Bremsscheibenträger (18) einstückig ausgebildet ist, und dass der Verbindungsabschnitt (60) des Bremsscheibenträgers (18) an einer äusseren Umfangsfläche des Verbindungselementes (24) befestigbar ist und in diesem Bereich mit dem Verbindungselement (24), insbesondere mittels Elektronenstrahlschweissung verschweisst ist.

2. Bremsscheibenanordnung nach Anspruch 1, dadurch gekennzeichnet, dass das Verbindungselement (24) umlaufend ringförmig ausgebildet ist, wobei die äussere Umfangsfläche zumindest eine Anlagefläche (64) für den Verbindungsabschnitt (60) des Bremsscheibenträgers (18) bildet.

3. Bremsscheibenanordnung nach Anspruch 1, dadurch gekennzeichnet, dass mehrere segmentartige Verbindungselemente (68) vorgesehen sind, die gleichmässig über den Umfang verteilt sind.

4. Bremsscheibenanordnung nach Anspruch 2 oder 3, dadurch gekennzeichnet, dass das ringförmige Verbindungselement (24) radial nach aussen weisende Vorsprünge (63) aufweist, die Anlageflächen (64) für den Verbindungsabschnitt (60) des Blechträgers bilden.

5. Bremsscheibenanordnung nach einem der vorhergehenden Ansprüche, dadurch gekennzeichnet, dass die Bremsscheibe zur Kühlung aus zwei axial voneinander beabstandeten, über Rippen (62), Stege oder dergleichen miteinander verbundenen Teilreibringen (26a, 26b) besteht.

6. Bremsscheibenanordnung nach Anspruch 5, dadurch gekennzeichnet, dass das Verbindungselement (24) nur in einem, insbesondere dem dem Bremsscheibenträger (18) zugewandten Teilreibring (26b) angeordnet ist.

7. Bremsscheibenanordnung nach einem der vorhergehenden Ansprüche, dadurch gekennzeichnet, dass die in Umfangrichtung verlaufende Schweissnaht sich im wesentlichen achsparallel erstreckt.

8. Bremsscheibenanordnung nach einem der vorhergehenden Ansprüche, dadurch gekennzeichnet, dass die Differenz (X) des Aussendurchmessers des Verbindungselementes (24) und des Reibringes (26) im wesentlichen der Dicke des Verbindungselementes (24) entspricht.

9. Bremsscheibenanordnung nach einem der vorhergehenden Ansprüche, dadurch gekennzeichnet, dass der Bremsscheibenträger (18) Verstärkungsrippen (66) aufweist, die sich im wesentlichen in radialer und/oder Umfangsrichtung erstrecken.

10. Bremsscheibenanordnung nach Anspruch 9, dadurch gekennzeichnet, dass die Verstärkungsrippen (66) mittels Pressen, Prägen oder Tiefziehen im Bremsscheibenträger (18) geformt sind.

11. Bremsscheibenanordnung nach Anspruch 10, dadurch gekennzeichnet, dass die Verstärkungsrippen (66) sich durchgehend in zumindest zwei Armen (60) erstrecken.

12. Bremsscheibenanordnung nach einem der Ansprüche 5 – 11, dadurch gekennzeichnet, dass der dem Bremsscheibenträger abgewandte Teilreibring (26a) einen grösseren Durchmesser aufweist als der andere Teilreibring (26b).

13. Bremsscheibenanordnung nach einem der vorhergehenden Ansprüche, dadurch gekennzeichnet, dass der Verbindungsabschnitt des Blech-Bremsscheibenträgers von den Endabschnitten mehrerer sternförmig angeordneter Arme gebildet ist.

14. Bremsscheibenanordnung nach einem der Ansprüche 1 – 12, dadurch gekennzeichnet, dass der Verbindungsabschnitt umlaufend napfförmig ausgebildet ist und zumindest eine, dem Bremsring benachbarte Öffnung (70) zur Entnahme des Bremsbelags aufweist.

15. Bremsscheibenanordnung nach einem der vorhergehenden Ansprüche, dadurch gekennzeichnet, dass das Verbindungselement sich im wesentlichen in axialer Richtung erstreckende Öffnungen, insbesondere durchgehende Bohrungen (65, 72) aufweist,

16. Bremsscheibenanordnung nach Anspruch 10, dadurch gekennzeichnet, dass die Öffnungen zum Innenrand des Verbindungselementes offen sind.

**Revendications**

1. Ensemble de disque de frein pour frein à disque à chevauchement par l'intérieur (2), notamment pour véhicule automobile, comportant un anneau de frein en fonte (26), qui comporte deux surfaces de freinage disposées sur des côtés opposés, et un support de disque de frein en tôle (18), qui comprend au moins une section de liaison (60) par l'intermédiaire de laquelle il est relié à l'anneau de freinage (26) dans la zone du contour périphérique extérieur de celui-ci, caractérisé en ce qu'au moins un élément de liaison (24) s'étendant de façon sensiblement radiale est monté sur l'anneau de frein en fonte (26), le diamètre extérieur de cet élément de liaison (24) n'étant que faiblement supérieur au diamètre extérieur de l'anneau de frein en fonte (26), en ce que le support de disque de frein (18) est réalisé en une seule pièce et en ce que la section de liaison (60) du support de disque de frein (18) peut être fixée sur une surface périphérique extérieure de l'élément de liaison (24) et est soudée, dans cette zone, à l'élément de liaison (24), notamment par soudage par bombardement électronique.

2. Ensemble de disque de frein suivant la revendication 1, caractérisé en ce que l'élément de liaison (24) a une forme annulaire faisant tout le tour, sa surface périphérique extérieure formant au moins une surface d'appui (64) pour la section de liaison (60) du support de disque de frein (18).

3. Ensemble de disque de frein suivant la revendication 1, caractérisé en ce qu'il est prévu plusieurs éléments de liaison en forme de segment (68) qui sont régulièrement répartis sur la périphérie.

4. Ensemble de disque de frein suivant la revendication 2 ou 3, caractérisé en ce que l'élément annulaire de liaison (24) comporte des saillies s'étendant radialement vers l'extérieur (63) qui forment des surfaces d'appui (64) pour la section de liaison (60) du support en tôle.

5. Ensemble de disque de frein suivant l'une des revendications précédentes, caractérisé en ce que, en vue du refroidissement, le disque de frein est constitué de deux anneaux partiels de frottement (26b) espacés axialement l'un de l'autre et réunis entre eux par des nervures (62), des ponts ou analogues.

6. Ensemble de disque de frein suivant la revendication 5, caractérisé en ce que l'élément de liaison (24) n'est disposé que dans un seul anneau partiel de frottement (26b), notamment celui tourné vers le support de disque de frein (18).

7. Ensemble de disque de frein suivant l'une des revendications précédentes, caractérisé en ce que le cordon de soudure s'étendant suivant la direction circonférentielle est orienté sensiblement parallèlement à l'axe.

8. Ensemble de disque de frein suivant l'une des revendications précédentes, caractérisé en ce que la différence (X) entre le diamètre extérieur de l'élément de liaison (24) et l'anneau de frottement (26) correspond sensiblement à l'épaisseur de l'élément de liaison (24).

9. Ensemble de disque de frein suivant l'une des revendications précédentes, caractérisé en ce que le support de disque de frein (18) comporte des nervures de renforcement (66) qui sont orientées sensiblement suivant une direction radiale et/ou la direction circonférentielle.

10. Ensemble de disque de frein suivant la revendication 9, caractérisé en ce que les nervures de renforcement (66) sont réalisées dans le support de disque de frein (18) par emboutissage, estampage ou emboutissage profond.

11. Ensemble de disque de frein suivant la revendication 10, caractérisé en ce que les nervures de renforcement (66) s'étendent de façon continue sur au moins deux bras (60).

12. Ensemble de disque de frein suivant l'une des revendications 5 à 11, caractérisé en ce que l'anneau partiel de frottement (26a) situé du côté opposé au support de disque de frein offre un diamètre supérieur à l'autre anneau partiel de frottemment (26b).

13. Ensemble de disque de frein suivant l'une des revendications précédentes, caractérisé en ce que la section de liaison du support de disque de frein en tôle est formée par les tronçons extrêmes de plusieurs bras disposés en forme d'étoile.

14. Ensemble de disque de frein suivant l'une des revendications 1 à 12, caractérisé en ce que la section de liaison est en forme de cuvette faisant tout le tour et comporte au moins une ouverture (70) voisine de l'anneau de frein et destinée à l'extraction de la garniture de frein.

15. Ensemble de disque de frein suivant l'une des revendications précédentes, caractérisé en ce que l'élément de liaison comporte des ouvertures s'étendant sensiblement suivant la direction axiale, notamment des trous traversant (65, 72).

16. Ensemble de disque de frein suivant la revendication 10, caractérisé en ce que les ouvertures s'ouvrent vers le bord intérieur de l'élément de liaison.

**Claims**

1. A brake disc arrangement for an internally straddling disc brake (2), in particular for automotive vehicles, with a cast brake ring (26) comprising two braking surfaces positioned on opposite sides, and with a plate metal brake disc carrier (18) having at least one connecting section (60) by way of which it is coupled to the brake ring (26) in the area of the outer circumference of the latter, characterized in that to the said cast brake ring (26) at least one substantially radially extending connecting element (24) is fixed whose outside diameter is but slightly larger than the outside diameter of the cast brake ring (26), in that the brake disc carrier (18) is of integral design, and in that the connecting section (60) of the brake disc carrier (18) is adapted to be attached to an outer circumferential surface of the connecting element (24) and is welded in this area to the connecting element (24), in particular by means of electron-beam welding.

2. A brake disc arrangement as claimed in claim 1, characterized in that the said connecting element (24) is continuously ring-shaped all around, the outer circumferential surface forming at least one abutment face (64) for the said connecting section (61) of the said brake disc carrier (18).

3. A brake disc arrangement as claimed in claim 1, characterized in that several segmenttype said connecting elements (68) are provided which are uniformly distributed over the circumference.

4. A brake disc arrangement as claimed in claim 2 or in claim 3, characterized in that the said ring-shaped connecting element (24) is furnished with radially outwardly directed projections (63) which form abutment faces (64) for the said connecting section (61) of the said plate metal carrier.

5. A brake disc arrangement as claimed in anyone of the preceding claims, characterized in that for the purpose of cooling, the brake disc comprises two friction part-rings (26a, 26b) positioned at a distance from each other in axial direction and being interconnected through ribs (62), webs or similar means.

6. A brake disc arrangement as claimed in claim 5, characterized in that the said connecting element (24) is arranged in one said friction part-ring (26b) only, in particular in the one facing the said brake disc carrier (18).

7. A brake disc arrangement as claimed in anyone of the preceding claims, characterized in that the welding seam running in circumferential direction extends substantially paraxially.

8. A brake disc arrangement as claimed in anyone of the preceding claims, characterized in that the difference (X) of the outside diameters of the said connecting element (24) and of the said friction ring (26) generally corresponds to the thickness of the said connecting element (24).

9. A brake disc arrangement as claimed in anyone of the preceding claims, characterized in that the said brake disc carrier (18) is formed with stiffening ribs (66) which extend substantially in radial and/or in circumferential direction.

10. A brake disc arrangement as claimed in claim 9, characterized in that the said stiffening ribs (66) are formed in the said brake disc carrier (18) by pressing, stamping or deep-drawing.

11. A brake disc arrangement as claimed in claim 10, characterized in that the said stiffening ribs (66) extend continuously in at least two arms (60).

12. A brake disc arrangement as claimed in anyone of claims 5 to 11, characterized in that the said friction part-ring (26a) facing away from the said brake disc carrier has a larger diameter than the other said friction part-ring (26b).

13. A brake disc arrangement as claimed in anyone of the preceding claims, characterized in that the said connecting section of the said plate metal brake disc carrier is constituted by the end sections of several arms arranged in a starshaped configuration.

14. A brake disc arrangement as claimed in anyone of claims 1 to 12, characterized in that the said connecting section is cup-shaped continuously all around and has at least one opening (70) adjacent to the brake ring for the removal of the brake lining.

15. A brake disc arrangement as claimed in anyone of the preceding claims, characterized in that the said connecting element is formed with openings extending substantially in axial direction, in particular with through bores (65, 72).

16. A brake disc arrangement as claimed in claim 10, characterized in that the said openings are open in the direction of the internal edge of the said connecting element.

Fig.1

Fig. 2

Fig. 3

Fig. 4

EP 0 177 672 B1

4 / 4

Fig. 5

68

65    65

Fig. 6

71

72

Fig. 7

24

26

70

69

15